# EUROPÄISCHE PATENTSCHRIFT

(11) **EP 1 250 683 B1**
(45) Veröffentlichungstag und Bekanntmachung des Hinweises auf die Patenterteilung: **03.11.2004**
(21) Anmeldenummer: 01913767.8
(22) Anmeldetag: 24.01.2001
(51) Int. Cl.: G07D 11/00, E05G 1/14, G07F 7/10

(54) **GELDAUTOMAT**
CASH DISPENSER
DISTRIBUTEUR AUTOMATIQUE DE BILLETS DE BANQUE

(30) Priorität: 24.01.2000 DE 10002841; 01.08.2000 DE 10037465
(43) Veröffentlichungstag der Anmeldung: 23.10.2002
(73) Patentinhaber: Wincor Nixdorf International GmbH, 33106 Paderborn (DE)
(72) Erfinder: BREXEL, Dirk, 59590 Geseke (DE); CAROZZI, Andrea, 33129 Delbrück (DE); VOSS, Hans-Günther, 33098 Paderborn (DE); HOLLAND-LETZ, Günter, 33106 Paderborn (DE)
(74) Vertreter: Schaumburg, Thoenes, Thurn, Landskron Patentanwälte
(86) Internationale Anmeldenummer: PCT/EP2001/000769
(87) Internationale Veröffentlichungsnummer: WO 2001/054078

(56) Entgegenhaltungen:
- EP-A- 0 692 599
- EP-A- 0 965 955
- WO-A-01/06464
- WO-A-93/02435
- WO-A-97/13225

## Beschreibung

Die Erfindung betrifft einen Geldautomaten, umfassend ein Gehäuse mit einem Aufnahmeraum für mindestens eine Banknotenspeichereinheit, eine der Speichereinheit zugeordnete Entnahmevorrichtung zum Entnehmen einzelner Banknoten aus der Speichereinheit, eine Banknotentransportvorrichtung zum Transport der Banknoten zwischen der Speichereinheit und einem Bedienungsfeld des Geldautomaten, eine Stromversorgungseinheit und eine Steuervorrichtung zur Steuerung der Funktionen des Geldautomaten.

Es existiert bis heute kein Verfahren zur lückenlosen Sicherung von Bargeld vor unbefugtem Zugriff innerhalb des Geldkreislaufes in Handel und Banken. Sicherheitsprobleme treten immer an den Schnittstellen auf, wenn beispielsweise Bargeld aus Kassensystemen entnommen oder im Geldautomaten nachgefüllt werden muß.

Üblicherweise werden in Geldausgabe-/-eingabeautomaten Banknotenbehälter oder -kassetten verwendet, die in zentralen Lade- oder Füllstationen gefüllt oder entleert werden müssen. Zur stationären Sicherung von Bargeld an Kassenarbeitsplätzen und Geldautomaten kommen Tresore zum Einsatz, in welche die Banknotenbehälter eingesetzt werden. Der Transport der Banknotenkassetten wird meist durch Werttransportdienstleister durchgeführt. Dafür werden heute laut Vorschrift der Berufsgenossenschaften in Deutschland drei Mitarbeiter und ein gepanzertes Fahrzeug benötigt. Die Situation in anderen Ländern ist analog. Üblicherweise muß ein Mitarbeiter das gepanzerte Fahrzeug bewachen, während die beiden anderen einen Kassettenwechsel vornehmen oder Geld vor Ort nachfüllen. Dieser hohe personelle und materielle Aufwand ist erforderlich, um Überfälle abzuwehren oder auch eine Manipulation durch die Geldboten selbst auszuschließen ("Vier-Augen-Prinzip"). Diese Form der Bargeldsicherung ist mit sehr hohen Kosten verbunden.

Der Erfindung liegt die Aufgabe zugrunde, einen Geldautomaten der eingangs genannten Art anzugeben, der eine lückenlose Sicherung des Bargeldkreislaufes zwischen dem Geldautomaten und der zugehörigen Bank mit geringem personellem und materiellem Aufwand ermöglicht.

Diese Aufgabe wird erfindungsgemäß dadurch gelöst, daß in einem verschließ- und verriegelbaren kastenförmigen Behälter die mindestens eine Banknoten-Speichereinheit, eine erster Banknotenförderer, der die Entnahmevorrichtung mit einem Durchtrittsschlitz in der Behälterwand verbindet, ein Antrieb für die Entnahmevorrichtung und den ersten Banknotenförderer, eine erste Steuereinheit zur Steuerung der in dem Behälter eingeschlossenen Funktionseinheiten und ein Sicherungsmechanismus angeordnet sind, der bei unautorisierter Manipulation an dem Behälter die in diesem vorhandenen Banknoten unbrauchbar macht, daß der Aufnahmeraum des Gehäuses des Geldautomaten zur Aufnahme des Behälters ausgebildet ist, daß das Gehäuse einen zweiten Banknotenförderer zur Verbindung des Durchtrittsschlitzes des Behälters mit dem Bedienungsfeld sowie eine zweite Steuereinheit zur Steuerung der an das Gehäuse gebundenen Funktionseinheiten enthält und daß der Behälter eine mit dem Antrieb und der ersten Steuereinheit in dem Behälter verbundene Schnittstelle zum Anschluß desselben an die zweite Steuereinheit hat.

Bei der erfindungsgemäßen Lösung ersetzt der Behälter wegen des in ihm enthaltenen Sicherungsmechanismus den bisher erforderlichen Tresor, den Transportsicherungskoffer und das gepanzerte Fahrzeug und ermöglicht so einen lückenlosen Sicherheitsprozeß sowie ein neues Konzept bei dem Aufbau von Geldautomaten. Der Behälter bildet einen mobilen Tresor, der als in sich gekapselte, abgeschlossene Einheit schnell und sicher an den stationären Teil des Geldautomaten angeschlossen werden kann. Da der Behälter wegen des in ihm enthaltenen Sicherungsmechanismus selbst nicht gepanzert zu sein braucht, kann er von einer einzelnen Person gehandhabt werden. Ein gepanzertes Fahrzeug entfällt dadurch ebenfalls. Damit reduzieren sich der oben beschriebene Aufwand und die damit verbundenen Kosten drastisch.

Die EP o 692 599 B1 beschreibt zwar schon ein System zum geschützten Transport von Artikeln wie Schecks, Banknoten und dergleichen mit einem ein Sicherungssystem enthaltenden Behälter, der jeweils in einer Andockstation entladen oder beladen werden kann. Die Andockstation hat jedoch hier nur die Funktion, ein Öffnen und Verriegeln des Behälters zu ermöglichen, ohne daß der Selbstzerstörungsmechanismus in Funktion tritt. Eine Entnahme von Banknoten aus dem Behälter ohne Öffnung desselben ist in dieser Schrift weder erwähnt noch wären die dort beschriebenen Mittel dazu geeignet, eine Verwendung des Behälters in einem Geldautomaten zu ermöglichen.

Wesentlich für die Klassifizierung des Behälters als mobiler Tresor ist die Tatsache, daß die einzige Öffnung in der Tresorwand ein Durchtrittsschlitz für Banknoten ist. Alle Funktionseinheiten, die benötigt werden, um aus dem Behälter zu entnehmende Banknoten durch den Durchtrittsschlitz zu schieben, sind innerhalb des Behälters angeordnet. Neben dem Durchtrittsschlitz sind somit lediglich noch Durchtrittsöffnungen für Leitungen erforderlich, welche die Schnittstelle mit den Funktionseinheiten innerhalb des Behälters verbinden. Dabei kann die Schnittstelle zum Anschluß der in dem Behälter enthaltenen Funktionseinheiten an die Stromversorgungseinheit des Geldautomaten augebildet sein, so daß also Steuerleitungen und Stromversorgungsleitungen durch die Behälterwand hindurchgeführt werden müssen. Im übrigen ist der Behälter jedoch vollständig geschlossen. Es muß weder ein Banknotenförderer noch ein Antriebselement (beispielsweise eine Zapfwelle) von außen in den Container eingeführt werden. Dies würde eine weitere Öffnung in der Oberfläche des Containers mit sich bringen, die nicht ausreichend gegen Manipulation abgesichert werden kann. Um auch eine Ansteuerung der Funktionselemente durch nicht autorisierte Personen über die Steuerleitungen zu verhindern, ist es zweckmäßig, wenn die Kommunikation zwischen der ersten Steuereinheit des Behälters und der zweiten Steuereinheit in dem stationären Teil des Geldautomaten verschlüsselt wird. Dadurch wird gewährleistet, daß der Behälter nur durch den Geldautomaten entleert werden kann, dem er zugeordnet ist. Bei Diebstahl des Behälters besteht keine Möglichkeit, diesen mit Hilfe eines Nachbaus des Geldautomaten oder dergleichen ohne gewaltsames Öffnen zu entleeren.

Das erfindungsgemäße Konzept des Geldautomaten ermöglicht es, den Behälter einerseits robust und kompakt und andererseits doch auch leicht auszuführen, so daß er von einem Mann transportiert werden kann. Da während des Transports des Behälters größere Strecken und auch Höhenunterschiede zu überwinden sind, ist es zweckmäßig, wenn der Behälter mit Rädern verbunden ist, so daß er nicht die ganze Zeit von der Transportperson getragen werden muß. Vorzugsweise ist der Behälter auf einem Fahrgestell angeordnet und auf diesem zwischen einer abgesenkten Transportposition und einer angehobenen Position verstellbar, in der er in den Aufnahmeraum des Geldautomaten einführbar ist. Das Fahrgestell kann etwa nach Art einer Sackkarre ausgebildet sein, an der der Behälter verstellbar geführt ist. Um den Behälter leichter anheben zu können, kann an dem Fahrgestell eine Hubvorrichtung wie beispielsweise eine Gasfeder oder dergleichen angeordnet sein, welche nach Lösen einer Verriegelung den Behälter an dem Fahrgestell anhebt oder zumindest das Anheben desselben unterstützt.

In dem Aufnahmeraum des Geldautomatengehäuses sind zweckmäßigerweise Führungselemente vorgesehen, die zum Zusammenwirken mit Gegenelementen an dem Behälter oder dem Fahrgestell bestimmt sind und eine genaue Positionierung des Behälters sowie insbesondere eine genaue Positionierung der Schnittstellen relativ zu der entsprechenden Anschlußstelle am Geldautomaten ermöglichen. Sofern der Behälter mit einem Griff verbunden ist, kann dieser schwenkbar oder abnehmbar an dem Behälter angeordnet sein, so daß er das Schließen des Aufnahmeraumes nicht behindert.

Um die Banknoten in die Speichereinheit oder die Speichereinheiten in dem Behälter einfüllen beziehungsweise aus ihm entnehmen zu können, umfaßt der Behälter in an sich bekannter Weise einen Behälterkörper und einen gegenüber diesem beweglichen Deckel, der an dem Behälterkörper durch ein Schloß verriegelbar ist, wobei dieses zweckmäßigerweise kontaktfrei zu betätigen ist, um leichter zwischen einer zulässigen Schloßbetätigung und einem mechanischen Manipulationsversuch unterscheiden zu können.

Der Behälterkörper und der Deckel können beispielsweise, wie dies von Geldkoffern bekannt ist, aus mit Glasfaser verstärktem Kunstharz bestehen, in das ein sehr feinmaschiges Drahtnetz eingelassen ist. Beschädigungen des Drahtnetzes lösen den Sicherheitsmechanismus, beispielsweise eine Sprengvorrichtung aus, durch die ein Farbstoff in dem Behälter verteilt wird.

Enthält der Behälter mehrere Speichereinheiten zur Aufnahme unterschiedlicher Banknotensorten, so ist zweckmäßigerweise jeder Speichereinheit eine eigene Entnahmevorrichtung zugeordnet.

Der Sicherungsmechanismus ist zweckmäßigerweise kontaktfrei aktivierbar und deaktivierbar und auch vorzugsweise über eine Fernsteuerung auslösbar. Der letztere Fall ist wichtig, wenn der Banknotenbehälter als ganzes in unbefugte Hände geraten ist und man den Inhalt unbrauchbar machen möchte, bevor jemand überhaupt die Chance hat, durch Manipulation an dem Behälter an seinen Inhalt zu gelangen. Hierzu kann der Behälter in an sich bekannter Weise mit einem Ortungssender versehen sein, so daß er beispielsweise über Satellitenpositionierungssysteme gefunden und/oder gezielt angesteuert werden kann.

Die Sicherheit des Behälters wird dadurch erhöht, daß der Sicherungsmechanismus nach dem Befüllen in einer Banknotenladestation aktiviert wird, während des Transports zum , des Betriebes im und der Entnahme aus dem Geldautomaten sowie während des Rücktransportes zur Banknotenladestation ununterbrochen aktiviert bleibt und auch nicht deaktivierbar ist und nur in der Banknotenladestation deaktiviert werden kann.

Alternativ hierzu kann die Aktivierung und Deaktivierung des Sicherungsmechanismus auch über die Steuereinheit des Geldautomaten erfolgen, dem er zugeordnet ist, so daß bestimmte Prozeduren verwendet werden können, die wiederum in der Datenverarbeitungseinrichtung des Geldautomaten gesichert gespeichert sind.

Vorzugsweise sind die Antriebe der Banknotenförderer sowohl in dem Behälter als auch in dem Geldautomaten reversierbar, wobei die Speichereinheit in dem Behälter zur Abgabe und Aufnahme einzelner Banknoten ausgebildet ist. Wenn der Speichereinheit ferner eine Vorrichtung zur geordneten Eingabe von Banknoten in die Speichereinheit zugeordnet ist, kann der erfindungsgemäße Geldautomat zum Ausgeben und zur Entgegennahme von Banknoten verwendet werden. Ferner kann der Behälter auch in einer Andockstation automatisch geladen und entladen werden, ohne daß er geöffnet zu werden braucht. Dies erhöht die Sicherheit gegenüber unehrlichen Mitarbeitern in der Bank.

Die Speichereinheit kann zur Aufnahme eines Stapels von Banknoten ausgebildet sein, wobei die Entnahmevorrichtung als Abzugs- und Vereinzelungsvorrichtung ausgebildet ist, wie dies an sich bekannt ist.

Bei einer anderen bevorzugten Ausführungsform ist mindestens eine der Speichereinheiten als Wickelspeicher ausgebildet, der mindestens ein Speicherband hat, das von einer Vorratsrolle über einen nahe der Durchtrittsöffnung angeordnete Umlenkrolle auf einen Wickelkern und vice versa auf wickelbar ist, wobei der Wickelkern und die Vorratsrolle durch einen Wickelantrieb antreibbar sind. Ein Wickelspeicher hat den Vorzug, daß keine Vereinzelungsvorrichtung zum Abziehen und Vereinzeln der Banknoten benötigt wird, da die Banknoten einzeln zwischen den Bandlagen des Wickelspeichers liegen. Gleichzeitig ist damit auch die Gefahr eines Mehrfachabzuges ausgeschlossen, so daß auch eine entsprechende Kontrollvorrichtung zur Prüfung auf Mehrfachabzug entfallen kann. Schließlich hat die Verwendung eines Wikkelspeichers den Vorzug, daß Banknoten ohne großen Aufwand nicht nur aus der Speichereinheit entnommen sondern auch in diesen eingegeben werden können.

Bei einer bevorzugten Ausführungsform des Wickelspeichers hat der Wickelkern zwei Spulen, die achsparallel in einem Abstand nebeneinander angeordnet sind und von denen mindestens eine mit dem Wickelantrieb koppelbar ist, wobei das Speicherband beide Spulen gemeinsam auf ihren einander abgewandten Umfangsbereichen umschlingt. Der Wickelkern ist also nicht zylindrisch, sondern hat die Form eines flachgedrückten langgestreckten Ovals, so daß der auf einem solchen Wickelkern gebildete Speicherwickel auch ein herkömmliches quaderförmiges, zur Aufnahme eines Banknotenstapels bestimmtes Gehäuse optimal ausfüllen könnte. Dies erleichtert die Kombination des Wickelspeichers mit Speichereinheiten anderer Bauart und ihre gemeinsame raumsparende Unterbringung in dem Behälter.

Der vorstehend beschriebene Wickelspeicher hat gegenüber herkömmlichen Wickelspeichern darüber hinaus den Vorteil, daß in dem Speicherwickel gespeicherte Banknoten nicht ständig gekrümmt werden sondern auch auf den geraden Abschnitten zwischen den beiden Spulen gespeichert sind. Befinden sich Banknoten längere Zeit aufgewickelt auf einer Spule, so behalten sie eine bleibende Krümmung, welche ihre Handhabung in einem Geldautomaten beeinträchtigt. Um diese Krümmung zu vermeiden, kann bei dem erfindungsgemäßen Wikkelspeicher der Wickel beispielsweise auch immer um einige Schritte vor- oder zurückbewegt werden, um so Banknoten aus dem gekrümmten Teil des Wickels in den geraden Teil zu bewegen und umgekehrt und dadurch eine permanente Krümmung der gespeicherten Banknoten zu verhindern.

Es genügt an sich, das eine Ende des Speicherbandes an einer der beiden Spulen zu befestigen und das Band zumindest einmal vollständig um den Wickelkern herumzuführen, bevor mit dem Zuführen von Banknoten begonnen wird. Der Wickelkern kann aber auch so gestaltet sein, daß die beiden Spulen von einem die Umfangshülle des Wickelkerns bildenden Endlosband umschlungen sind, auf das das Speicherband aufwickelbar ist. Dies ist zumindest dann zweckmäßig, wenn das Speicherband nur einlagig ausgeführt ist.

Das Speicherband kann aber auch zwei Einzelfolien umfassen, die als Doppellage auf der Vorratsrolle aufgewickelt und auf getrennten Wegen zu der Abgabestelle der Speichereinheit geführt sind, wo sie unter Bildung eines Banknotenein-/-ausgabespaltes über eine Umlenkrolle wieder zusammengeführt und als Doppellage auf den Wickelkern gewickelt sind. Bei dieser Lösung werden die Banknoten nicht zwischen dem Wickel und dem auf den Wickel auflaufenden Speicherband sondern zwischen den beiden Einzelfolien des Speicherbandes gespeichert.

Der Behälter kann zusätzlich zu der mindestens einen Banknotenspeichereinheit für auszugebende Banknoten auch ein Sammelfach für zurückzunehmende Banknoten enthalten. Ein solches Sammel- oder Reject-Fach dient dazu, Banknoten aufzunehmen, die zwar dem Kunden angeboten, von diesem aber nicht entnommen wurden. Oder die Banknoten wurden zwar für die Ausgabe bereitgestellt, dann jedoch wegen Abbruch einer Transaktion oder wegen irgendeines Fehlers nicht an den Kunden ausgegeben. Diese Banknoten werden aus buchungstechnischen Gründen üblicherweise nicht wieder in die Speichereinheit für die auszugebenden Banknoten eingeordnet sondern in einem solchen Sammelfach abgelegt.

Bei den herkömmlichen Geldautomaten sind die auszugebenden Banknoten oder auch das Sammelfach üblicherweise als gesicherte Kassetten ausgebildet. Dies ist bei der erfindungsgemäßen Lösung nicht mehr erforderlich. Die Speichereinheit und/oder das Sammelfach können als in den Behälter einschiebbare einfache Schubladen ausgebildet sein, wobei bei den Speichereinheiten lediglich eine Andruckvorrichtung und ein Antrieb für diese vorhanden sein müssen. Viele der bisher üblichen Kassetten-Funktionselemente, die zur Realisierung einer sauberen Schnittstelle zwischen den Banknotenkassetten und den Vereinzelungseinheiten erforderlich waren, werden bei der erfindungsgemäßen Lösung nicht mehr benötigt, wie beispielsweise Klappen zum Verschließen der Kassettenöffnungen, Rückzugsbügel, Wiederholsperren, Steuerkulissen, Schlösser und dergleichen. Dadurch wird der konstruktive, materielle und finanzielle Aufwand für derartige Banknotenspeichereinheiten wesentlich geringer.

Die Schubladen werden beispielsweise auf Schienen eines Gestells geführt, das von den Behälterwänden umgeben ist, so daß die Führungen für die Schubladen nicht unmittelbar an den Behälterwänden befestigt zu werden brauchen. Die Schubladen können zur exakten Positionierung vor der Entnahmevorrichtung eine Arretierung haben und sind vorzugsweise auf unterschiedliche Notenbreiten einstellbar.

Der Sicherungsmechanismus kann so ausgeführt werden, daß oberhalb der jeweiligen Schublade eine Banknotenfärbe- oder -zerstörungseinheit angeordnet ist, so daß die Banknoten in allen Speichereinheiten von dem Färbe- oder Zerstörungsmechanismus erreicht werden und keine toten Winkel für die Wirkung des Sicherungsmechanismus entstehen.

Bei den meisten Geldausgabeautomaten werden die einzeln aus den Banknotenkassetten abgezogenen Banknoten anschließend zu einem Bündel gesammelt, das dem Kunden im Ausgabefach des Bedienfeldes angeboten wird. Die Sammelvorrichtung, in der die einzelnen Banknoten zu einem Bündel gesammelt werden, kann an verschiedenen Stellen des Transportweges angeordnet sein. Grundsätzlich besteht die Möglichkeit, diese Sammelstelle in dem Behälter unterzubringen. In diesem Falle muß der Durchtrittsschlitz etwas breiter sein, um ein Bündel von Banknoten durchzulassen. Zur Erhöhung der Sicherheit ist es jedoch zweckmäßig, wenn der Durchtrittsschlitz möglichst schmal bleibt. Daher ist bei einer bevorzugten Ausführungsform die Sammelstelle im Weg des zweiten Banknotenförderers, das heißt in dem stationären Teil des Geldautomaten angeordnet. Für den Fall, daß das Banknotenbündel wieder zurückgenommen und in das Sammelfach transportiert werden soll, müssen entweder die Banknoten des Bündels wieder vereinzelt werden, so daß die einzelnen Banknoten durch den Durchtrittsschlitz des Behälters zurück in das Sammelfach transportiert werden können, oder es wird das gesamte Bündel zu dem Sammelfach transportiert. Dabei tritt natürlich ebenso wie bei der Ausgabe eines Banknotenbündels das Problem auf, daß der Durchtrittsschlitz entsprechend breit sein muß, um das Bündel durchzulassen. Zusätzlich ergibt sich auch noch die Schwierigkeit, daß das relativ steife Banknotenbündel in dem Behälter in einer Weiche mit einem relativ engen Radius zu dem Sammelfach hin umgelenkt werden muß. Auf der einen Seite möchte man also möglichst ohne eine Vereinzelungsvorrichtung zum Vereinzeln der Banknoten des zurückzunehmenden Bündels auskommen, andererseits soll aber der Durchtrittsspalt möglichst schmal und das Bündel auch um enge Radien umlenkbar sein.

Dieses Problem wird erfindungsgemäß dadurch gelöst, daß der zweite Banknotenförderer eine erste Transportstrecke mit zwei Riementrieben, zwischen deren parallel zueinander gerichteten, jeweils über eine Antriebswalze gleichsinnig umlaufenden Endlosriemen ein Banknotenbündel erfaßt und transportiert wird, sowie eine Antriebsvorrichtung zum Antrieb der Riementriebe hat und daß die Riementriebe mindestens in Richtung von dem Bedienungsfeld zum Sammelfach hin mit unterschiedlichen Geschwindigkeiten antreibbar sind.

Werden in der erfindungsgemäß vorgeschlagenen Weise die beiden zum Transport des Banknotenbündels zusammenwirkenden Riementriebe mit unterschiedlicher Geschwindigkeit angetrieben, so wird das Banknotenbündel aufgefächert. Während also beim Transport der Banknoten zum Ausgabefach des Bedienungsfeldes die beiden Riementriebe exakt gleich schnell laufen, um die Banknoten kantengleich ausgerichtet in einem Bündel dem Kunden im Ausgabefach anzubieten, so wird beim Rücktransport das Bündel aufgefächert, wodurch es dünner und wesentlich flexibler wird und sich auch um relativ kleine Radien problemlos biegen läßt. Auf einer gegebenen Länge kann die Auffächerung durch mehrmaliges Hin-und Herfahren des Bündels nach Wunsch verstärkt werden.

Eine unterschiedliche Antriebsgeschwindigkeit der beiden Riementriebe läßt sich dadurch bewerkstelligen, daß die Antriebsvorrichtung für jeden Riementrieb jeweils einen eigenen Motor hat, von denen mindestens einer in seiner Geschwindigkeit steuerbar ist.

Die Antriebsvorrichtung kann aber auch wie bisher mit einem Motor auskommen, indem einer der beiden Riementriebe in der einen Transportrichtung über einen ersten Getriebezug und in der anderen Transportrichtung über einen zweiten Getriebezug mit einer gegenüber dem ersten Getriebezug verschiedenen Übersetzung mit dem Motor koppelbar ist.

Bei einer praktischen Ausführungsform dieser Lösung sind die Antriebswalze eines ersten Riementriebes und eine zu ihr parallele Zwischenwelle drehfest mit dem Motor gekoppelt, während die Antriebswalze des zweiten Riementriebes über eine erste Einwegkupplung mit der ersten Antriebswalze und über eine zweite Einwegkupplung, deren Wirkrichtung zu jener der ersten Einwegkupplung entgegengesetzt ist, mit der Zwischenwelle in drehmomentübertragender Verbindung steht.

Die Einwegkupplungen können in unterschiedlicher Weise ausgeführt sein. Beispielsweise kann eine der Einwegkupplungen ein Rastenfreilauf oder Klemmkörperfreilauf und die andere Einwegkupplung eine Rutschkupplung sein, die in der einen Richtung eine Drehmomentübertragung ermöglicht und in der anderen Richtung ein Sperren des Getriebes verhindert, wenn zwei Getriebeelemente mit unterschiedlicher Drehzahl aufeinandertreffen.

Die Aufnahme der Differenzgeschwindigkeit mit einer Rutschkupplung belastet aber natürlich den Antriebsmotor.

Ist dies unerwünscht, können die Einwegkupplungen auch von Schlingfederkupplungen mit einander entgegengesetzter Wirkungsrichtung gebildet werden. Die Schlingfederkupplungen ziehen sich in der jeweiligen Drehrichtung auf der Welle, auf der sie sitzen, zu oder winden sich zum Trennen der Drehmomentübertragung auf. Die Steuerung der Schlingfedern erfolgt in der Regel über eine Reitkupplung mit geringem Drehmoment.

Die erste Transportstrecke kann auf einfache Weise mit einer weiteren zwei Riementriebe umfassenden Transportstrecke gekoppelt sein, wobei ein Endlosriemen des einen Riementriebes über die erste Antriebswalze und der Endlosriemen des zweiten Riementriebes über eine Antriebswalze geführt ist, die auf der Zwischenwelle sitzt. Da die erste Antriebswalze und die Zwischenwelle stets mit gleicher Drehzahl angetrieben werden, laufen auch die beiden Riementriebe dieser zweiten Transportstrecke gleich schnell, so daß auf dieser zweiten Transportstrecke das Banknotenbündel immer in der Form transportiert wird, in der es in die zweite Tranportstrecke gelangt ist, das heißt entweder mit kantengleich ausgerichteten Banknoten oder in aufgefächerter Form. Die zweite Transportstrecke kann die erste Transportstrecke mit der Sammelstelle oder dem Durchtrittsschlitz verbinden.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:
- Figur 1: eine perspektivische schematische Darstellung eines erfindungsgemäßen Geldautomaten mit herausgezogenem Banknotenbehälter,
- Figur 2: einen schematischen Vertikalschnitt durch den erfindungsgemäßen Geldautomaten mit eingeschobenem Banknotenbehälter,
- Figur 3: eine schematischen Seitenansicht einer Speichereinheit mit einem Wickelspeicher,
- Figur 4: eine teilweise schematische Draufsicht auf eine eine Bündeltransportstrecke bildende Transporteinheit beim Transport eines ausgerichteten Banknotenbündels in Richtung auf ein Ausgabefach des Geldautomaten,
- Figur 5: eine der Figur 4 entsprechende Ansicht beim Auffächern eines Banknotenbündels beim Transport desselben in der entgegengesetzten Transportrichtung,
- Figur 6: eine schematische Seitenansicht der in der Figur 4 dargestellten Transporteinheit entlang Linie VI-VI in Figur 4 zur Erläuterung eines ersten Gebriebezuges und
- Figur 7: einen schematischen Schnitt entlang Linie-VII-VII in Figur 5 zur Erläuterung des anderen Getriebezuges.

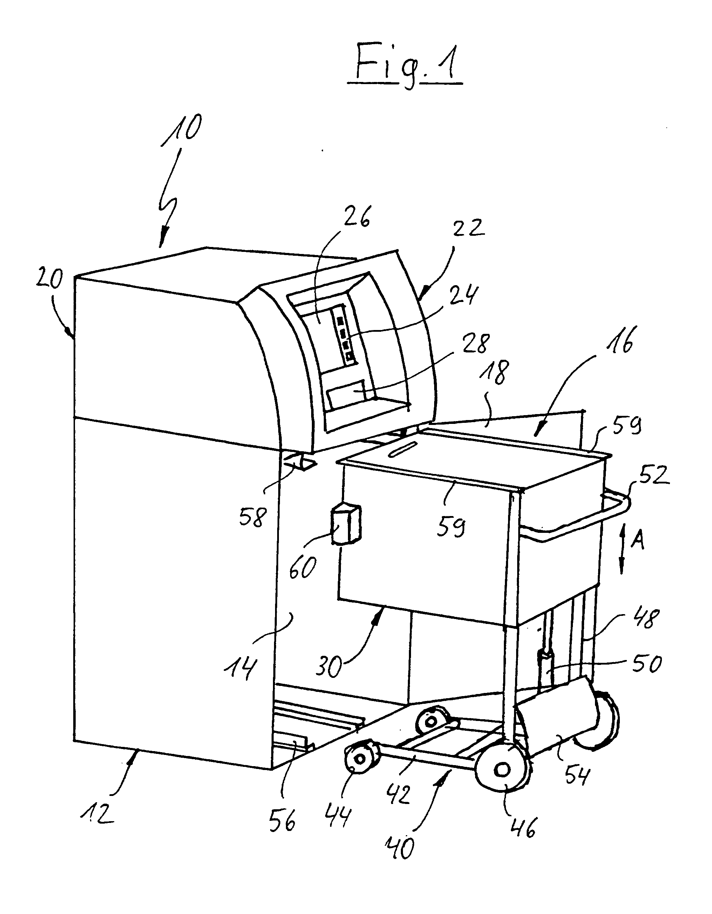

Der in Figur 1 dargestellte Geldautomat umfaßt ein allgemein mit 10 bezeichnetes Gehäuse mit einem schrankartigen Unterteil 12, das einen Aufnahmeraum 14 für einen mobilen Tresor 16 bildet und durch eine Türe 18 verschließbar ist.

In einem Gehäuseoberteil 20 über dem Gehäuseunterteil 12 sind die für die Ausgabe und die Entgegennahme von Banknoten erforderlichen stationären Funktionseinheiten des Geldautomaten eingeschlossen, die im folgenden, soweit erforderlich, noch erläutert werden. An der Vorderseite des Oberteils 20 befindet sich ein Bedienungsfeld 22 mit verschiedenen schematisch angedeuteten Bedienungselementen 24, einem Anzeigeschirm 26 und einem Ausgabefach 28. Das Bedienungsfeld 22 kann selbstverständlich noch weitere Elemente wie beispielsweise ein Fach zum Einlegen von Banknoten, einen Schlitz für das Einführen einer Identitätskarte und dergleichen haben. Diese Elemente spielen aber für die vorliegende Anmeldung keine Rolle und werden daher nicht näher erläutert.

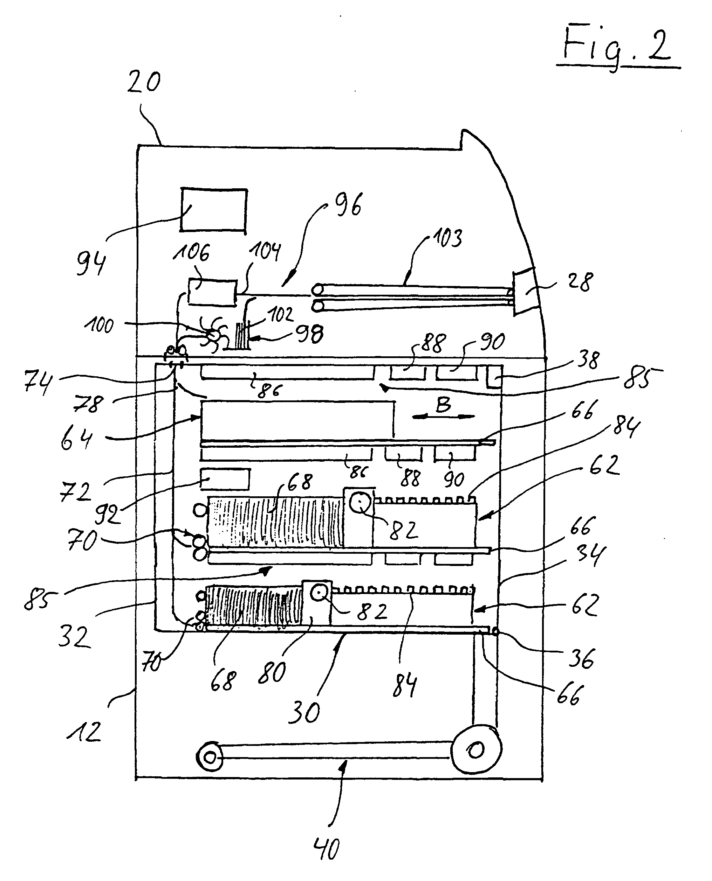

Der mobile Tresor 16 umfaßt einen kastenförmigen Behälter 30 mit einem Behälterkörper 32 und einer Klappe 34, die um eine Achse 36 schwenkbar an dem Behälterkörper 32 angelenkt ist und durch ein Schloß 38 verriegelbar ist (Figur 2).

Der Behälter 30 ist an einem allgemein mit 40 bezeichneten Fahrgestell angeordnet, das einen horizontalen Rahmen 42 mit vorderen Rädern 44 und hinteren Rädern 46 sowie einen sich von den hinteren Rädern 46 nach oben erstreckenden vertikalen Rahmen 48 umfaßt, an dem der Behälter 30 in Richtung des Doppelpfeiles A auf und ab verstellbar geführt ist, so daß der Behälter zwischen einer nicht dargestellten ersten Stellung, in der er auf den horizontalen Rahmen 42 abgesenkt ist und der in der Figur 1 dargestellten oberen Stellung verstellbar ist. Die Aufwärtsbewegung des Behälters 30 kann durch eine Gasfeder 50 unterstützt werden, die einerseits an dem horizontalen Rahmen 42 und andererseits an der Außenseite des Behälters 30 angreift. An dem oberen Ende des vertikalen Rahmens 48 befindet sich ein Griffbügel 52, der schwenkbar oder abnehmbar an dem vertikalen Rahmen 48 angeordnet ist, so daß er nach dem Einführen des mobilen Tresors 16 in den Aufnahmeraum 14 abgenommen oder nach unten geklappt werden kann, um das Schließen der Tür 18 nicht zu behindern. Auf dem Fahrgestell 40 kann der Behälter 30 wie auf einer Sackkarre von einer Person transportiert werden. Damit er beim Transport über Treppen oder beim Absenken über eine Ladebordwand nicht beschädigt wird, ist am anderen Teil des vertikalen Rahmens 48 zwischen den Hinterrädern 46 eine Verstärkungsplatte 54 angeordnet.

In dem Aufnahmeraum 14 sind am Boden des Gehäuseunterteils 12 Führungsschienen 56 zur Führung des Fahrgestells 40 angeordnet. Ebenso sind an der Deckfläche des Gehäuseunterteils 12 Führungsschienen 58 vorgesehen, in die am Behälter 30 vorgesehenen Leisten 59 eingreifen, um den Behälter 30 beim Einschieben in den Aufnahmeraum 14 so zu führen, daß er exakt in die vorgesehene Position innerhalb des Gehäuses 10 gelangt, wo er durch nicht dargestellte Verriegelungsmittel arretiert wird.

An der Außenseite des Behälters 30 ist ein Stecker 60 angeordnet, der Anschlüsse für die Stromversorgung und die Übertragung von Steuersignalen hat und zum Kontaktieren eines in dem Aufnahmeraum 14 vorgesehenen nicht dargestellten Gegensteckers bestimmt ist. Der Stecker 60 ist über Strom- und Steuerleitungen mit Funktionseinheiten innerhalb des Behälters 30 verbunden und verbindet diese Funktionseinheiten über den Gegenstecker im Aufnahmeraum 14 mit Funktionseinheiten in dem stationären Teil des Geldautomaten.

Der Behälter 30 enthält im dargestellten Ausführungsbeispiel zwei Speichereinheiten 62 für auszugebende Banknoten sowie einen Sammelbehälter 64 für Banknoten, die für einen Auszahlungsvorgang vorbereitet wurden, aber aus irgendeinem Grunde dem Kunden nicht ausgehändigt werden konnten. Sowohl die Speichereinheiten 62 als auch der meist als Reject-Kassette bezeichnete Sammelbehälter 64 sind schubladenartig ausgebildet und auf Führungsschienen 66 in Richtung des Doppelpfeiles B verschiebbar geführt, so daß sie aus dem Behälterkörper 32 herausgezogen werden können. Die beiden Speichereinheiten 62 dienen jeweils zur Aufnahme eines Banknotenstapels 68, dessen vorderes Ende bei vollständig eingeschobener Schublade an eine Abzugs- und Vereinzelungsvorrichtung 70 grenzt, mit der in an sich bekannter Weise einzelne Banknoten von dem Stapel 68 abgezogen werden können. Die Vereinzelungsvorrichtungen 70 stehen in Verbindung mit einem Vertikaltransport 72, der die Vereinzelungsvorrichtung mit einem Durchtrittsschlitz 74 in der Deckfläche des Behälters 30 verbindet. Der Vertikaltransport 72 ist in seiner Transportrichtung reversierbar und enthält eine Weiche 78, über die Banknoten, die durch den Durchtrittsschlitz in den Behälter 30 eingeführt werden, der Reject-Kassette 64 zugeführt werden können.

In der Schublade jeder Speichereinheit 62 ist ein Andruckschlitten 80 angeordnet, der den Banknotenstapel 68 in Richtung auf die Abzugs- und Vereinzelungsvorrichtung 70 schiebt. Der Transport des Andruckschlittens 80 erfolgt über einen an dem Schlitten angeordneten Motor 82, dessen Antriebsritzel mit einer an der Schublade befestigten Zahnstange 84 kämmt.

Oberhalb einer jeder Speichereinheit 62 und auch der Reject-Kassette 64 ist an einem die Führungsschienen 66 enthaltenden, im übrigen aber nicht dargestellten Gestell innerhalb des Behälters 30 jeweils eine Banknotenfärbeeinheit 85 angeordnet, der einen Tinten- oder Farbstoffbehälter 86 hat, aus dem durch eine Explosionseinheit 88 Tinte über den gesamten Behälterinhalt versprüht werden kann. Die Explosionseinheit 88 wird durch eine Auslöseeinheit 90 ausgelöst. Die Auslöseeinheit 90 kann aktiviert und deaktiviert werden und spricht im aktivierten Zustand auf mechanische und elektronische Manipulationsversuche an dem Behälter 30 an. Hierzu ist noch festzuhalten, daß sämtliche Außenwände des Behälters 30 in den Sicherheitsmechanismus einbezogen sind. Dies kann beispielsweise dadurch geschehen, daß die Behälterwände aus glasfaserverstärktem Kunststoff bestehen, in den ein feines Drahtnetz eingebettet ist. Dieses Drahtnetz ist mit der Auslöseeinheit 90 so verbunden, daß jede Beschädigung des Drahtnetzes die Färbeeinheit auslöst.

In dem Behälter 30 befindet sich ferner eine erste Steuereinheit 92, welche die Antriebe der Abzugs- und Vereinzelungsvorrichtungen 70 und des Vertikaltransporters 72 sowie die Weiche 78 steuert. Diese Steuereinheit 92 ist über den Stecker 60 mit einer zweiten Steuereinheit 94 verbunden, die in dem Gehäuseoberteil 20 des Geldautomaten angeordnet ist (Figur 2).

In dem Gehäuseoberteil 20 ist ferner ein Banknotenförderer 96 angeordnet, der den Durchtrittsschlitz 74 in dem Behälter 30 mit dem Ausgabefach 28 am Bedienungsfeld 22 des Geldautomaten verbindet. Der Banknotenförderer 96 enthält eine Sammelstelle 98 mit einem Stapelrad 100, um die einzeln aus den Speichereinheiten 62 abgezogenen Banknoten zu einem Bündel 102 zu stapeln, das dann übereinen Ausgabetransport 103 als Bündel im Ausgabefach 28 einem Kunden dargeboten wird. Der Banknotenförderer 96 kann ferner eine weitere Transportstrecke 104 haben, über die Banknoten, die der Kunde im Ausgabefach 28 nicht entnommen hat, nach einer vorgegebenen Zeit wieder zurücktransportiert und in der Reject-Kassette 64 abgelegt werden. Bei einer Ausführungsform der Erfindung werden die Banknoten des zurückgezogenen Bündels dabei in einer Vereinzelungsvorrichtung 106 vereinzelt, so daß sie einzeln durch den Durchtrittsschlitz 74 des Behälters 30 an den Vertikaltransport 72 übergeben werden können, der sie über die Weiche 78 zu der Reject-Kassette 64 fördert. Auf dem gleichen Wege können im Prinzip vom Kunden eingezahlte Banknoten den Speichereinheiten 62 zugeführt werden, um sie in diesen in geordneter Form, das heißt in Stapelform abzulegen. Dies kann entweder durch eine geeignete nicht dargestellte Vorrichtung zum Einführen der Banknoten in die Speichereinheiten 62 geschehen oder aber bei geeigneter Ausbildung der Vereinzelungsvorrichtungen durch eine Umkehr der Transportrichtung der Vereinzelungselemente. Ferner müssen dann die eingegebenen Banknoten in an sich bekannter Weise eine nicht Prüfvorrichtung durchlaufen, welche die Echtheit der eingegebenen Banknoten und ihren äußeren Zustand überprüft. Banknoten, die diese Prüfung nicht bestehen, werden entweder an den Kunden zurückgegeben oder aber in dem Reject-Fach 64 abgelegt.

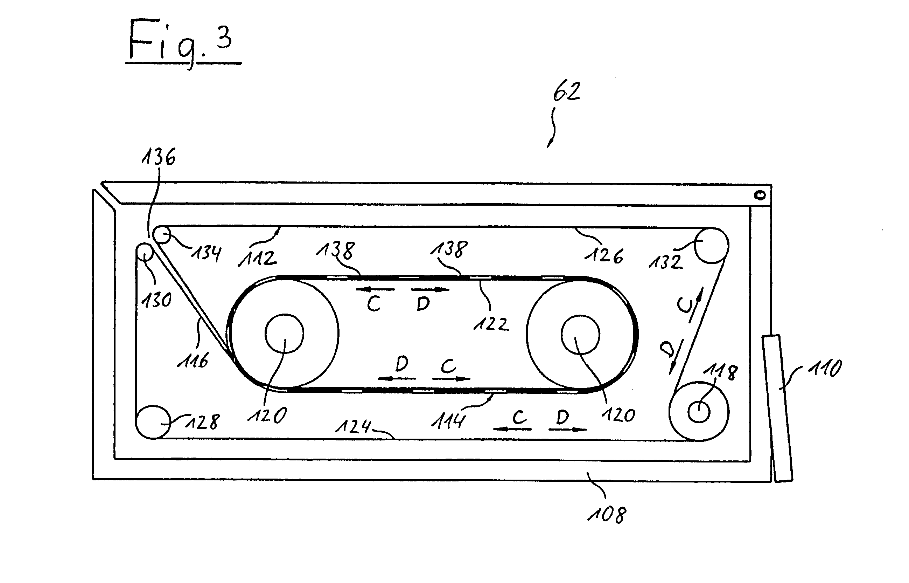

Figur 3 zeigt ein Ausführungsbeispiel einer Speichereinheit zur Speicherung von Banknoten, die sich sowohl für die Ausgabe als auch die geordnete Ablage von Banknoten eignet, ohne daß hierzu spezielle Vereinzelungs- oder Eingabevorrichtungen notwendig wären.

Die in Figur 3 dargestellte Speichereinheit umfaßt ein kastenförmiges Gehäuse oder eine Schublade 108, an deren Außenseite ein Handgriff 110 angelenkt ist. Innerhalb der Schulade 108 befindet sich ein Wickelspeicher 112 mit einem Wickelkern 114 und einem doppellagigen Speicherband 116, das von einer Vorratsrolle 118 auf den Wickelkern 114 oder von dem Wickelkern 114 auf die Vorratsrolle 118 gewickelt werden kann.

Der Wickelkern 114 umfaßt zwei Spulen 120, die mit zueinander parallelen Achsen in einem Abstand nebeneinander angeordnet sind, so daß das auf den Wickelkern 114 auflaufende Speicherband einen Wickel bildet, der in Seitenansicht die Form eines flachgedrückten Ovales hat. Über die beiden Spulen 120 ist zweckmäßigerweise ein Endlosband 122 geführt, das die Spulen 120 auf ihren einander abgekehrten Umfangsabschnitten umschlingt und eine geschlossene Umfangsfläche des Wickelkerns 114 bildet, auf welche das Speicherband 116 aufgewickelt wird.

Das Speicherband 116 besteht aus zwei Einzelbändern 124, 126, wobei das Einzelband 124 über Umlenkrollen 128, 130 und das Einzelband 126 über Umlenkrollen 132, 134 zum Wikkelkern 114 geführt ist. Die Umlenkrollen 130 und 134 bilden zusammen mit den Einzelbändern 124, 126 einen Walzensplat 136, durch den Banknoten 138 zwischen die Einzelbänder 124, 126 eingeführt beziehungsweise aus dem Wikkelspeicher 112 herausgegeben werden können.

Die Vorratsrolle 118 sowie mindestens eine der Spulen 120 ist mit einem reversierbaren Antrieb verbunden oder koppelbar, der entweder in der Schublade 108 oder außerhalb derselben in dem Behälter 30 angeordnet ist, wobei im letzteren Fall eine entsprechende Kupplung an der Außenseite der Schublade vorgesehen sein muß, um die Wellen der Vorratsrolle 118 und der betreffenden Spule 120 mit dem Antrieb oder den Antrieben zu koppeln.

Zum Einspeichern von Banknoten 138 werden diese in den Walzenspalt 136 eingeführt und von den beiden Einzelbändern 124, 126 erfaßt und eingeschlossen, wenn diese in Richtung der Pfeile C von der Vorratsrolle 118 auf den Wickelkern 114 auflaufen, wobei in diesem Falle eine der Spulen 120 oder auch beide Spulen 120 angetrieben werden, während die Vorratsrolle 118 frei oder gegebenenfalls leicht gebremst mitläuft. Für die Ausgabe von Banknoten 138 laufen die Einzelbänder 124, 126 in Richtung der Pfeile D von dem Wickelkern 114 auf die Vorfahrtsrolle 118 auf, wodurch die zwischen den Einzelbändern 124, 126 gespeicherten Banknoten 138 einzeln durch den Walzenspalt 136 ausgeschoben werden. Dabei wird die Vorratsrolle 118 angetrieben, während die Spulen 120 frei oder leicht gebremst mitlaufen. Um die mechanische Beanspruchung des Speicherbandes 116 zu verringern, kann es gegebenenfalls auch zweckmäßig sein, die Spulen 120 und die Vorratsrolle 118 stets gemeinsam und synchron anzutreiben.

Die vorstehend beschriebene Speichereinheit kann relativ flach ausgeführt werden, so daß sie gut und in raumsparender Weise mit gleichartigen oder anderen Speichereinheiten in dem oben beschriebenen Behälter untergebracht werden kann. Der besondere Vorzug der vorstehend beschriebenen Speichereinheit besteht darin, daß ohne besondere Maßnahmen Banknoten nicht nur ausgegeben sondern auch abgelegt werden können, während das Einspeichern von Banknoten in herkömmliche Stapelkassetten ungleich komplizierter ist, da das geordnete Ablegen von Banknoten in Form eines Stapels besondere technische Maßnahmen erfordert. Ein weiterer Vorteil des beschriebenen Wickelspeichers mit langgestrecktem Wickelkern besteht darin, daß in den zwischen den Spulen 120 liegenden Abschniten des Wickelkernes 114 die Banknoten eben liegen. Bei herkömmlichen Wickelspeichern dagegen sind die Banknoten immer gekrümmt. Wenn sie eine längere zeit in dem Wickelspeicher verbleiben, behalten die Banknoten diese Krümmung auch nach ihrer Entnahme aus der Speichereinheit bei. Gekrümmte Banknoten sind jedoch in den automatischen Transportvorrichtungen eines Geldautomaten oder bei der Bündelbildung schlecht zu handhaben.

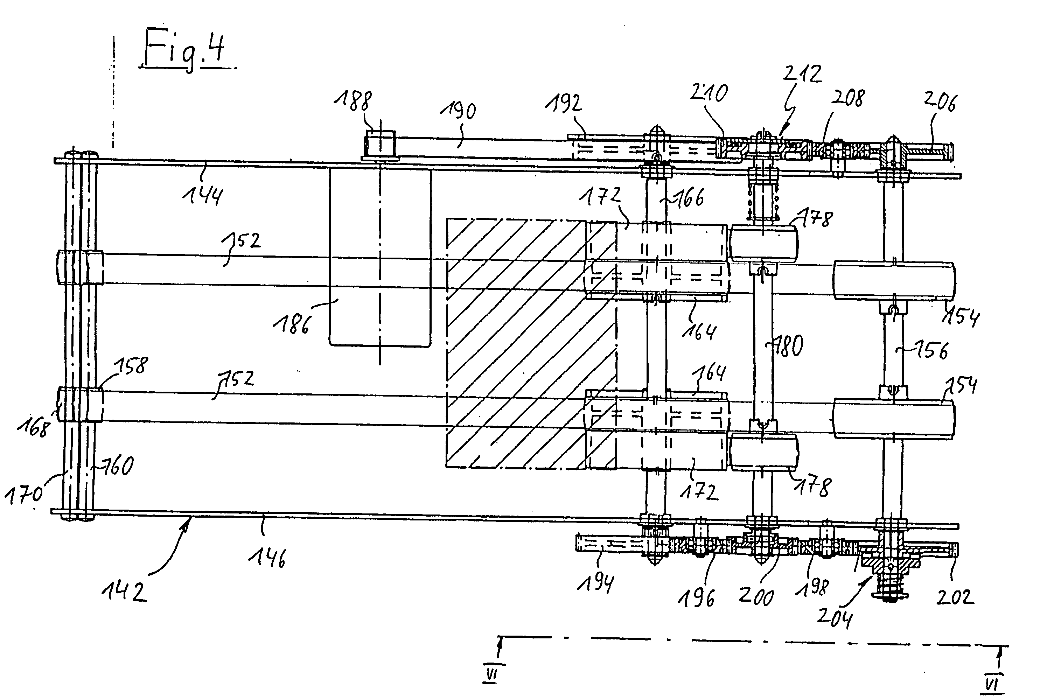

Anhand der Figuren 4 bis 7 wird nun eine Ausführungsform des Ausgabetransportes 103 erläutert, die es ermöglicht, die Dicke und Steifigkeit eines Banknotenbündels zu verringern, so daß es als Bündel durch den Durchtrittsschlitz 74 in die Reject-Kassette transportiert werden kann. Die Vereinzelungsvorrichtung 106 kann in diesem Beispiel entfallen.

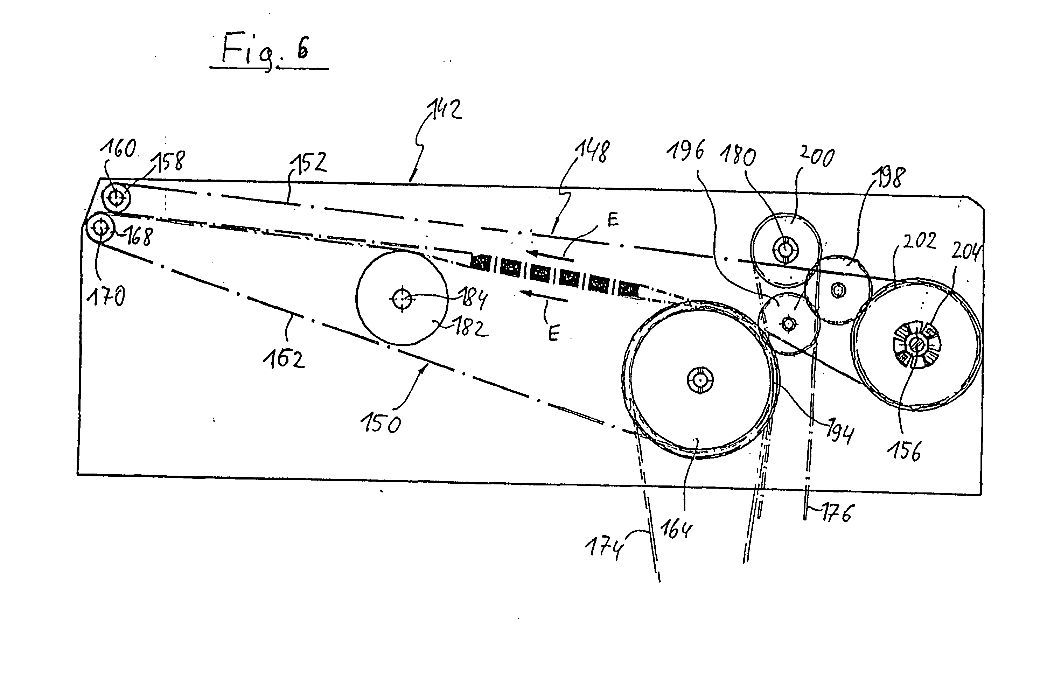

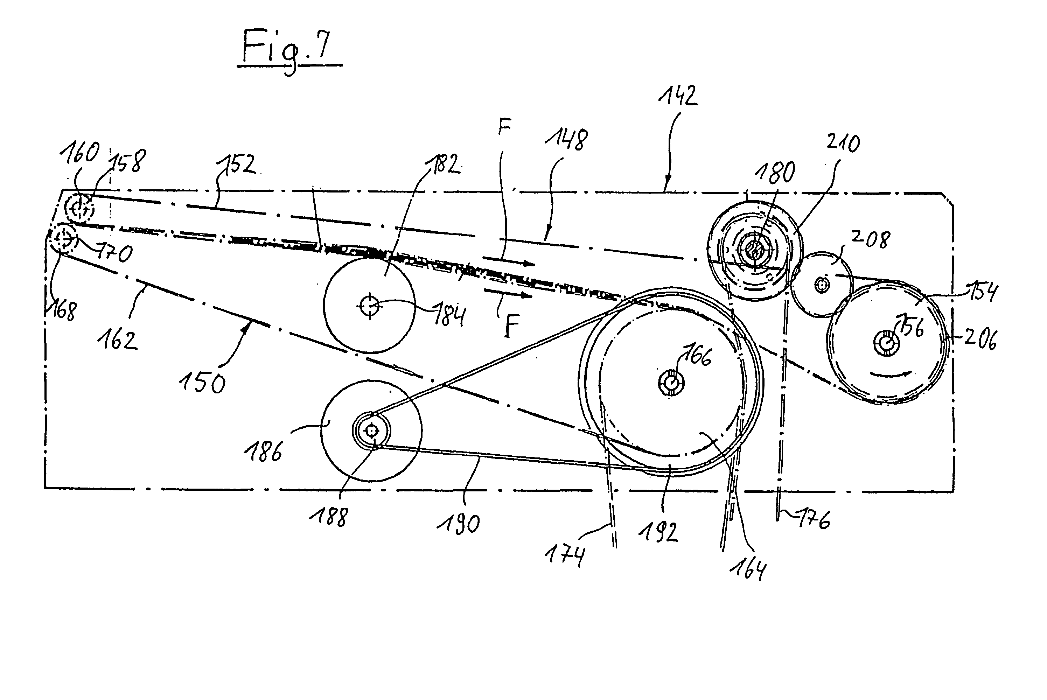

Der Ausgabetransport 103 hat einen Lagerrahmen 142 mit zwei zueinander parallelen Rahmenwänden 144, 146. Zwischen den Rahmenwänden 144 und 146 sind ein oberer Riementrieb 148 und ein unterer Riementrieb 150 angeordnet. Der obere Riementrieb 148 umfaßt zwei Endlosriemen 152, die jeweils über eine Rolle 154, die drehfest auf einer in den Rahmenwänden 144 und 146 gelagerten Antriebswelle 156 sitzt, und eine Rolle 158 laufen, die auf einer in den Rahmenwänden 144 und 146 gelagerten Welle 160 frei drehbar gelagert ist. Der untere Riementrieb 150 umfaßt zwei Endlosriemen 162, die jeweils über eine Rolle 164, die drehfest auf einer in den Rahmenwänden 144 und 146 gelagerten Antriebswelle 166 sitzen, und eine Rolle 168 laufen, die auf einer in den Rahmenwänden 144 und 146 gelagerten Welle 170 frei drehbar gelagert ist. Die Untertrume der Endlosriemen 152 des oberen Riementriebes 148 wirken mit den Obertrumen der Endlosriemen 162 des unteren Riementriebes 150 zusammen, um ein Banknotenbündel zu transportieren, wie dies in den Figuren 6 und 7 zu erkennen ist.

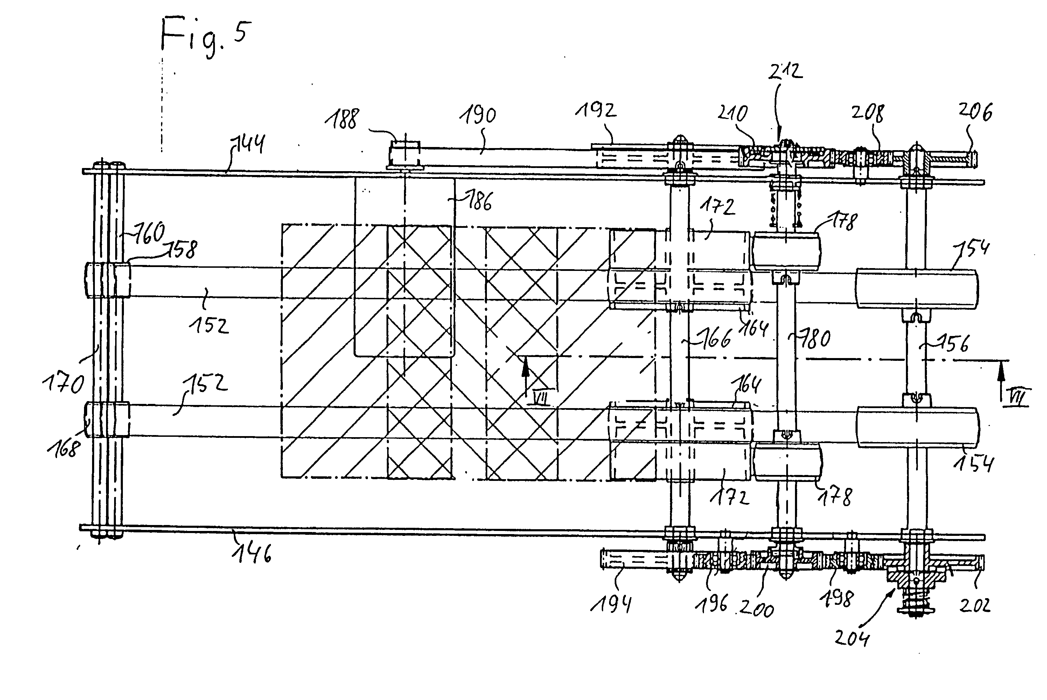

Auf der Antriebswelle 166 sind co-axial zu den Rollen 164 zwei weitere Rollen 172 drehfest angeordnet, über welche jeweils ein Endlosriemen 174 läuft. Die beiden Endlosriemen 174 bilden einen Riementrieb der Banknotentransportstrecke 104 und wirken mit einem weiteren Riementrieb, das heißt zwei weiteren Endlosriemen 176 zusammen, die jeweils über eine obere Umlenkrolle 178 laufen, die ihrerseits jeweils drehfest auf einer in den Rahmenwänden 144 und 146 gelagerten Zwischenwelle 180 sitzen. Wie man aus einem Vergleich zwischen den Figuren 4 und 5 einerseits und den Figuren 6 und 7 andererseits sieht, können die zwischen den Endlosriemen 174 und 176 geführten Banknoten an die Riementriebe 148 und 150 übergeben werden. Ebenso kann die Übergabe in umgekehrter Richtung erfolgen.

Um ein Durchhängen der Endlosriemen 152 und 162 des horizontalen Ausgabetransportes zu vermeiden, laufen die Obertrume der Endlosriemen 162 des unteren Riementriebes 150 über eine Stützwalze oder Stützrollen 182, die ebenfalls auf einer in den Rahmenwänden 144 und 146 gelagerten Welle 184 sitzen, wie dies die Figuren 6 und 7 zeigen.

Der Antrieb der Riementriebe des Ausgabetransportes 103 und der Transportstrecke 104 erfolgt über einen Motor 186, der an der Innenseite der Rahmenwand 144 angeordnet ist und dessen auf der Außenseite der Rahmenwand 144 liegendes Antriebsrad 188 über einen Treibriemen 190 ein auf der Antriebswelle 166 drehfest sitzendes Treibrad 192 antreibt. Das dem Treibrad 192 entgegengesetzte, aus der Rahmenwand 146 herausragende Ende der Antriebswelle 166 trägt ein erstes Zahnrad 194. Dieses steht in Eingriff mit einem an der Rahmenwand 146 gelagerten ersten Zwischenzahnrad 196, das seinerseits ein an der Rahmenwand 146 gelagertes zweites Zwischenzahnrad 198 antreibt. Das Zwischenzahnrad 198 steht seinerseits in Eingriff mit einem drehfest mit der Zwischenwelle 180 verbundenen zweiten Zahnrad 200 und andererseits mit einem dritten Zahnrad 202, das über eine erste Einwegkupplung 204 in Form eines Rastenfreilaufes mit der Antriebswelle 156 kuppelbar ist.

Auf einem über die Rahmenwand 144 hinausragenden Ende der Antriebswelle 156 sitzt drehfest ein viertes Zahnrad 206, das über ein an der Rahmenwand 144 gelagertes drittes Zwischenzahnrad 208 ein fünftes Zahnrad 210 antreibt, das mit der Zwischenwelle 180 über eine zweite Einwegkupplung 212 kuppelbar ist, die als Rutschkupplung ausgebildet ist. Die Rutschkupplung besteht aus einer drehfest mit der Zwischenwelle 180 verbundenen Bremsscheibe 214, gegen die das Zahnrad 210, das einen Bremsbelag 216 trägt, durch eine Schraubendruckfeder 218 gespannt wird.

Die vorstehende Beschreibung zeigt, daß die Antriebswelle 166 des unteren Riementriebes 150 und die Zwischenwelle 180 über die Zwischenzahnräder 196 und 198 in beiden Drehrichtungen gemeinsam mit der durch die Motordrehzahl und die Überseztungsverhältnisse bestimmten Drehzahl angetrieben werden. Die Antriebswelle 156 des oberen Riementriebes 148 dagegen wird in der einen Drehrichtung, in der die Rastenkupplung 204 greift und somit ein Drehmoment von dem Zahnrad 202 auf die Antriebswelle 156 übertragen kann, über den das Zahnrad 194, die Zwischenzahnräder 196 und 198, das Zahnrad 202 und die Einwegkupplung 204 umfassenden Getriebezug angetrieben. Ergibt sich dabei zwischen der Drehzahl der Zwischenwelle 180 und dem Zahnrad 210, das über das Zwischenzahnrad 208 von dem auf der Antriebswelle 156 sitzenden Zahnrad 206 angetrieben wird, ein Differenz, so wird diese von der Rutschkupplung 212 aufgenommen.

In der entgegengesetzten Drehrichtung, in der die Einwegkupplung 204 nicht greift und somit kein Drehmoment von dem Zahnrad 202 auf die Antriebswelle 156 übertragen werden kann, erfolgt der Antrieb der Antriebswelle 156 über den von dem Zahnrad 194, den Zwischenzahnrädern 196 und 198, dem Zahnrad 200, der Zwischenwelle 180, der Rutschkupplung 212, dem Zahnrad 210, dem Zwischenzahnrad 208 und dem Zahnrad 206 gebildeten Getriebezug.

Für den in den Figuren 4 und 6 dargestellten Vorwärtstransport, bei dem ein Banknotenbündel mit kantengleich ausgerichteten Banknoten in Richtung des Pfeiles E zum Ausgabefach 328 des Geldautomaten 10 transportiert werden soll, müssen die Endlosriemen 152 des oberen Riementriebes 148 und die Endlosriemen 162 des unteren Riementriebes 150 mit exakt der gleichen Geschwindigkeit umlaufen. Wird das Banknotenbündel dagegen gemäß den Figuren 5 und 7 von dem Ausgabefach 28 weg in Richtung auf die Reject-Kassette 64 transportiert, so soll es erfindungsgemäß dadurch aufgefächert werden, daß die Endlosriemen 152 des oberen Riementriebes 148 in Richtung des Pfeiles F mit einer höheren Geschwindigkeit umlaufen als die Endlosriemen 162 des unteren Riementriebes 150.

Die Übersetzungsverhältnisse im zweiten Getriebezug sind so gewählt, daß die Antriebswelle 156 des oberen Riementriebes 148 mit einer höheren Geschwindigkeit umläuft als die Antriebswelle 166 des unteren Riementriebes 150. Im ersten Getriebezug dagegen sind die Übersetzungsverhältnisse so gewählt, daß sich die Antriebswellen 156 und 166 mit gleicher Drehzahl drehen. Die Einwegkupplung 204 ist nun so ausgebildet, daß beim Rücklauf des Banknotenbündels, d.h. bei der durch die Pfeile F angegebenen Laufrichtung der Freilauf der Einwegkupplung 204 wirksam wird, so daß die Antriebswelle 156 des oberen Riementriebes 148 mit der durch den zweiten Getriebezug vorgegebenen höheren Drehzahl gedreht wird. In der durch die Pfeile E angegebenen Vorwärtsrichtung dagegen wird die Einwegkupplung 204 wirksam und sorgt für eine drehmomentübertragende Verbindung zwischen dem Zahnrad 202 und der Antriebswelle 156. Da die über den ersten Getriebezug bewirkte Drehzahl der Antriebswelle 156 geringer ist als die über den zweiten Getriebezug bewirkte Drehzahl, wird die Antriebswelle 56 durch die Einwegkupplung 204 im Vorwärtslauf gebremst. Die Drehzahldifferenz zwischen den beiden Getriebezügen wird durch die Rutschkupplung 212 aufgefangen.

Durch die mit unterschiedlicher Geschwindigkeit umlaufenden Riementriebe 148 und 150 werden die einzelnen Banknoten des Banknotenbündels in Laufrichtung gegeneinander verschoben, d.h. das Bündel wird aufgefächert. Dadurch wird das Bündel insgesamt dünner und flexibler, so daß es durch den Durchtrittsspalt 74 in den Behälter 30 eingeführt und leichter umgelenkt werden kann. Durch mehrmaligen Wechsel der Antriebsrichtung kann diese Auffächerung verstärkt werden, solange das Bündel insgesamt innerhalb der durch die Riementriebe 148 und 150 definierten Transportstrecke bleibt.

## Patentansprüche

1. Geldautomat, umfassend ein Gehäuse (10) mit einem Aufnahmeraum (14) für mindestens eine Banknotenspeichereinheit (62), eine der Speichereinheit (62) zugeordnete Entnahmevorrichtung (70) zum Entnehmen einzelner Banknoten aus der Speichereinheit (62), eine Banknotentransportvorrichtung (72) zum Transport der Banknoten zwischen der Speichereinheit (62) und einem Bedienungsfeld (22) des Geldautomaten, eine Stromversorgungseinheit und eine Steuervorrichtung (94) zur Steuerung der Funktionen des Geldautomaten, **dadurch gekennzeichnet, daß** in einem verschließ- und verriegelbaren kastenförmigen Behälter (30) die zumindest eine Banknotenspeicherheinheit (62), ein erster Banknotenförderer (72), der die Entnahmevorrichtung (70) mit einem Durchtrittsschlitz (74) in einer Behälterwand verbindet, ein Antrieb für die Entnahmevorrichtung (70) und den ersten Banknotenförderer (72), eine erste Steuereinheit (92) zur Steuerung der in dem Behälter (30) eingeschlossenen Funktionseinheiten und ein Sicherungsmechanismus (85) angeordnet sind, der bei unautorisierter Manipulation an dem Behälter (30) die in diesem vorhandenen Banknoten unbrauchbar macht, daß der Aufnahmeraum (14) des Gehäuses (10) des Geldautomaten zur Aufnahme des Behälters (30) ausgebildet ist, daß das Gehäuse (10) einen zweiten Banknotenförderer (96) zur Verbindung des Durchtrittsschlitzes (74) des Behälters (30) mit dem Bedienungsfeld (22) sowie eine zweite Steuereinheit (94) zur Steuerung der an das Gehäuse (10) gebundenen Funktionseinheiten enthält und daß der Behälter (30) eine mit dem Antrieb und der ersten Steuereinheit (92)in dem Behälter (30) verbundene Schnittstelle (60) zum Anschluß desselben an die zweite Steuereinheit (94) hat.

2. Geldautomat nach Anspruch 1, **dadurch gekennzeichnet, daß** die Schnittstelle (60) zum Anschluß der in dem Behälter (30) enthaltenen Funktionseinheiten an die Stromversorgungseinheit des Geldautomaten ausgebildet ist.

3. Geldautomat nach Anspruch 1 oder 2, **dadurch gekennzeichnet, daß** der Behälter (30) mit Rädern (44, 46) verbunden ist.

4. Geldautomat nach Anspruch 3, **dadurch gekennzeichnet, daß** der Behälter (30) auf einem Fahrgestell (40) angeordnet und auf diesem zwischen einer abgesenkten Transportposition und einer angehobenen Position verstellbar ist, in der er in den Aufnahmeraum (14) einführbar ist.

5. Geldautomat nach Anspruch 4, **dadurch gekennzeichnet, daß** an dem Fahrgestell (40) eine Hubvorrichtung (50) zum Anheben des Behälters (30) angeordnet ist.

6. Geldautomat nach Anspruch 5, **dadurch gekennzeichnet, daß** die Hubvorrichtung eine Gasfeder (50) ist.

7. Geldautomat nach einem der Ansprüche 1 bis 6, **dadurch gekennzeichnet, daß** in dem Aufnahmeraum (14) Führungselemente (56, 58) vorgesehen sind, die zum Zusammenwirken mit Gegenelementen (59) an dem Behälter (30) und/oder dem Fahrgestell (40) bestimmt sind.

8. Geldautomat nach einem der Ansprüche 1 bis 7, **dadurch gekennzeichnet, daß** der Behälter (30) einen Behälterkörper (32) und eine gegenüber diesem bewegliche Klappe (34) hat, die an dem Behälterkörper (32) durch ein kontaktfrei zu betätigendes Schloß (38) verriegelbar ist.

9. Geldautomat nach einem der Ansprüche 1 bis 8, **dadurch gekennzeichnet, daß** der Sicherungsmechanismus (86, 88, 90) ferngesteuert auslösbar ist.

10. Geldautomat nach einem der Ansprüche 1 bis 9, **dadurch gekennzeichnet, daß** der Sicherungsmechanismus (86, 88, 90) kontaktfrei aktivierbar und deaktivierbar ist.

11. Geldautomat nach Anspruch 10, **dadurch gekennzeichnet, daß** der Sicherungsmechanismus (86, 88, 90) nach dem Befüllen einer Banknotenspeichereinheit (62) in einer Banknotenladestation aktiviert wird, während des Transportes des Behälters (30) zum , des Betriebes im und der Entnahme des Behälters (30) aus dem Geldautomaten sowie des Rücktransportes zur Banknotenladestation ununterbrochen aktiviert bleibt und nicht deaktivierbar ist und nur in der Banknotenladestation deaktiviert werden kann.

12. Geldautomat nach einem der Ansprüche 1 bis 9, **dadurch gekennzeichnet, daß** der Sicherungsmechanismus (86, 88, 90) über die Steuereinheit (94) des Geldautomaten, dem der Behälter (30) zugeordnet ist, aktivierbar und deaktivierbar ist.

13. Geldautomat nach einem der Ansprüche 1 bis 12, **dadurch gekennzeichnet, daß** der Sicherungsmechanismus (86, 88, 90) einen Ortungssender enthält.

14. Geldautomat nach einem der Ansprüche 1 bis 13, **dadurch gekennzeichnet, daß** die Antriebe der Banknotenförderer (92, 72) reversierbar sind und daß die Speichereinheit (62) zur Abgabe und Aufnahme einzelner Banknoten ausgebildet ist.

15. Geldautomat nach Anspruch 14, **dadurch gekennzeichnet, daß** der Speichereinheit (62) eine Vorrichtung zur geordneten Eingabe von Banknoten in die Speichereinheit zugeordnet ist.

16. Geldautomat nach einem der Ansprüche 1 bis 15, **dadurch gekennzeichnet, daß** die Speichereinheit (62) zur Aufnahme eines Stapels (68) von Banknoten ausgebildet ist, wobei die Entnahmevorrichtung als Abzugs- und Vereinzelungsvorrichtung (70) ausgebildet ist.

17. Geldautomat nach einem der Ansprüche 1 bis 15, **dadurch gekennzeichnet, daß** die Speichereinheit ein Wickelspeicher ist, der mindestens ein Speicherband (116) hat, das von einer Vorratsrolle (118) auf einen Wickelkern (114) und vice versa aufwickelbar ist, wobei der Wikkelkern (114) und die Vorratsrolle (118) durch einen Wickelantrieb antreibbar sind.

18. Geldautomat nach Anspruch 17, **dadurch gekennzeichnet, daß** der Wickelkern (114) zwei Spulen (120) hat, die achsparallel in einem Abstand nebeneinander angeordnet sind und von denen mindestens eine mit dem Wickelantrieb koppelbar ist, wobei das Speicherband (116) beide Spulen (120) gemeinsam auf ihren einander abgewandten Umfangsbereichen umschlingt.

19. Geldautomat nach Anspruch 18, **dadurch gekennzeichnet, daß** beide Spulen (120) von einem die Umfangshülle des Wickelkerns (114) bildenden Endlosband (122) umschlungen sind, auf das das Speicherband (116) aufwickelbar ist.

20. Geldautomat nach Anspruch 18 oder 19, **dadurch gekennzeichnet, daß** das Speicherband (116) zwei Einzelbänder (124, 126) umfaßt, die als Doppellage auf der Vorratsrolle (118) aufgewickelt und auf getrennten Wegen zu einer Ausgabeöffnung des Wickelspeichers geführt sind, wo sie unter Bildung eines Banknotenein-/ausgabespaltes (136) jeweils über eine Umlenkrolle (130, 134) wieder zusammengeführt und als Doppellage auf den Wickelkern (114) aufgewickelt sind.

21. Geldautomat nach einem der Ansprüche 1 bis 20, **dadurch gekennzeichnet, daß** zusätzlich zu der mindestens einen Banknotenspeichereinheit (62) für auszugebende Banknoten ein Sammelfach (64) für zurückzunehmende Banknoten vorgesehen ist.

22. Geldautomat nach Anspruch 21, **dadurch gekennzeichnet, daß** die Speichereinheit (62) und/oder das Sammelfach (64) als in den Behälter (30) einschiebbare Schubladen ausgebildet sind.

23. Geldautomat nach Anspruch 22, **dadurch gekennzeichnet, daß** die Schubladen in Schienen (66) eines Gestells geführt sind, das von den Behälterwänden umgeben ist.

24. Geldautomat nach Anspruch 22 oder 23, **dadurch gekennzeichnet, daß** die einen Banknotenstapel enthaltende Schublade auf unterschiedliche Banknotenbreiten einstellbar ist.

25. Geldautomat nach einem der Ansprüche 22 bis 24, **dadurch gekennzeichnet, daß** oberhalb jeder Schublade eine Banknotenfärbe- oder -zerstörungseinheit (85) angeordnet ist.

26. Geldautomat nach einem der Ansprüche 1 bis 25, **dadurch gekennzeichnet, daß** im Weg des zweiten Banknotenförderers (96) eine Sammelstelle (98) zur Bildung eines auszugebenden Banknotenbündels (102) aus einzeln der mindestens einen Speichereinheit (62) entnommenen Banknoten vorgesehen ist.

27. Geldautomat nach einem der Ansprüche 1 bis 26, **dadurch gekennzeichnet, daß** der zweite Banknotenförderer (96) eine erste Transportstrecke (103) mit zwei Riementrieben (148, 150) hat, zwischen deren parallel zueinander gerichteten, jeweils über eine Antriebswalze (156, 166) gleichsinnig umlaufenden Endlosriemen (152, 162) ein Banknotenbündel erfaßt und transportiert wird, sowie eine Antriebsvorrichtung (186) zum Antrieb der Riementriebe (148, 150) hat und daß die Riementriebe (148, 150) mindestens in Richtung von dem Ausgabefach (28) zum Sammelfach (64) hin mit unterschiedlichen Geschwindigkeiten antreibbar sind.

28. Geldautomat nach Anspruch 27, **dadurch gekennzeichnet, daß** die Antriebsvorrichtung für jeden Riementrieb (148, 150) jeweils einen eigenen Motor hat, von denen mindestens einer in seiner Geschwindigkeit steuerbar ist.

29. Geldautomat nach Anspruch 27, **dadurch gekennzeichnet, daß** beide Riementriebe (148, 150) von einem gemeinsamen Motor (186) antreibbar sind und daß einer der beiden Riementriebe (148, 150) in der einen Transportrichtung über einen ersten Getriebezug (194, 196, 198, 204, 202) und in der anderen Transportrichtung über einen zweiten Getriebezug (194, 196, 198, 200, 180, 212, 210, 208, 206) mit einer gegenüber dem ersten Getriebezug verschiedenen Übersetzung mit dem Motor (186) koppelbar ist.

30. Geldautomat nach Anspruch 29, **dadurch gekennzeichnet, daß** die Antriebswalze (166) eines ersten Riementriebes (150) und eine zu ihr parallele Zwischenwelle (180) drehfest mit dem Motor (186) gekoppelt sind und daß die Antriebswalze (156) des zweiten Riementriebes (148) über eine erste Einwegkupplung (204) mit der ersten Antriebswalze (166) und über eine zweite Einwegkuppplung (212), deren Wirkrichtung zu jener der ersten Einwegkupplung (204) entgegengesetzt ist, mit der Zwischenwelle (180) in drehmomentübertragender Verbindung steht.

31. Geldautomat nach Anspruch 30, **dadurch gekennzeichnet, daß** eine der Einwegkupplungen ein Rastenfreilauf ist.

32. Geldautomat nach Anspruch 30, **dadurch gekennzeichnet, daß** eine der Einwegkupplungen ein Klemmkörperfreilauf ist.

33. Geldautomat nach Anspruch 31 oder 32, **dadurch gekennzeichnet, daß** die andere Einwegkupplung eine Rutschkupplung (212) ist.

34. Geldautomat nach Anspruch 30, **dadurch gekennzeichnet, daß** beide Einwegkupplungen Schlingfederkupplungen sind, die durch Reibkupplungen mit geringem Drehmoment gesteuert werden.

35. Geldautomat nach einem der Ansprüche 27 bis 34, **dadurch gekennzeichnet, daß** die erste Transportstrecke (103) mit einer zweiten zwei Riementriebe (174, 176) umfassenden Transportstrecke gekoppelt ist, wobei ein Endlosriemen (174) des einen Riementriebes über die erste Antriebswalze (166) und der Endlosriemen (176) des zweiten Riementriebes über eine Antriebswalze (178) geführt ist, die auf der Zwischenwelle (180) sitzt.

36. Geldautomat nach Anspruch 35, **dadurch gekennzeichnet, daß** die zweite Transportstrecke die ersten Transportstrecke (103) über eine Weiche (78) mit dem Sammelfach (64) verbindet.

## Claims

1. A cash dispenser comprising a housing (10) with a receiving space (14) for at least one bank note storage unit (62), a withdrawal device (70) associated with the storage unit (62) for withdrawing individual bank notes from the storage unit (62), a bank note transport device (72) for transport of the bank notes between the storage unit (62) and a control panel (22) of the cash dispenser, a power supply unit and a control device (94) for controlling the functions of the cash dispenser, **characterized in that** in a closable and lockable box-shaped container (30) are arranged said at least one bank note storage unit (62), a first bank note conveyor (72) which connects the withdrawal device (70) with a pass-through slot (74) in a wall of the container, a drive for the withdrawal device (70) and for the first bank note conveyor (72), a first control unit (92) for controlling the functional units enclosed in the container (30), and a security mechanism (85), which upon unauthorized manipulation of the container (30) makes the bank notes contained in the container unusable, **in that** the receiving space (14) of the housing (10) of the cash dispenser is formed to receive the container (30), **in that** the housing (10) has a second bank note conveyor (96) for connecting the pass-through slot (74) of the container (30) with the control panel (22) as well as a second control unit (94) for controlling the functional units connected to the housing (10), and **in that** the container (30) has an interface (60) connected with the drive and the first control unit (92) in the container (30) for connection of the same to the second control unit (94).

2. A cash dispenser according to claim 1, **characterized in that** the interface (60) is formed for connecting the functional units contained in the container (30) to the power supply unit of the cash dispenser.

3. A cash dispenser according to claim 1 or 2, **characterized in that** the container (30) is connected to wheels (44, 46).

4. A cash dispenser according to claim 3, **characterized in that** the container (30) is arranged on an undercarriage (40) and is moveable on said undercarriage between a lower transport position and a raised position in which raised position it is insertable into the receiving space (14).

5. A cash dispenser according to claim 4, **characterized in that** a lift mechanism (50) for lifting the container (30) is arranged on the undercarriage (40).

6. A cash dispenser according to claim 5, **characterized in that** the lift mechanism is a gas spring (50).

7. A cash dispenser according to one of claims 1 to 6, **characterized in that** guide elements (56, 58) are provided in the receiving space (14) which are intended to cooperate with complementary elements (59) on the container (30) and/or on the undercarriage (40).

8. A cash dispenser according to one of claims 1 to 7, **characterized in that** the container (30) has a container body (32) and a flap (34) movable relative to the container body, which flap is lockable to the container body (32) by a lock (38) which can be activated in a contact-free manner.

9. A cash dispenser according to one of claims 1 to 8, **characterized in that** the security mechanism (86, 88, 90) can be triggered by remote control.

10. A cash dispenser according to one of claims 1 to 9, **characterized in that** the security mechanism (86, 88, 90) can be activated and deactivated in a contact-free manner.

11. A cash dispenser according to claim 10, **characterized in that** the security mechanism (86, 88, 90) is activated after a bank-note storage unit (62) has been filled in a bank-note loading station, and then remains continuously activated and cannot be deactivated during the transport of the container (30) to the cash dispenser and during the use of the container (30) in the cash dispenser and its removal from the cash dispenser as well as while it is returned to the bank-note loading station, and **in that** it can only be deactivated in the bank-note loading station.

12. A cash dispenser according to one of claims 1 to 9, **characterized in that** the security mechanism (86, 88, 90) can be activated and deactivated by means of the control unit (94) of the cash dispenser with which the container (30) is associated.

13. A cash dispenser according to one of claims 1 to 12, **characterized in that** the security mechanism (86, 88, 90) contains a location transmitter.

14. A cash dispenser according to one of claims 1 to 13, **characterized in that** the drives of the bank note conveyors (92, 72) are reversible and that the storage unit (62) is designed to dispense and receive individual bank notes.

15. A cash dispenser according to claim 14, **characterized in that** the storage unit (62) has associated with it a device for the ordered input of bank notes into the storage unit.

16. A cash dispenser according to one of claims 1 to 15, **characterized in that** the storage unit (62) is designed to receive a stack (68) of bank notes, with the withdrawal mechanism being designed as a withdrawal and individualizing device (70).

17. A cash dispenser according to one of claims 1 to 15, **characterized in that** the storage unit is a winding store having at least one storage band (116), which is windable from a supply roll (118) onto a winding core (114) and vice versa, with the winding core (114) and the supply roll (118) being drivable by a winding drive.

18. A cash dispenser according to claim 17, **characterized in that** the winding core (114) has two spools (120) which are spaced in an axially parallel arrangement next to each other, while at least one of said spools can be coupled with the winding drive, the storage band (116) passing at the same time around circumferential areas of both of said spools (120) which areas face away from one another.

19. A cash dispenser according to claim 18, **characterized in that** the two spools (120) are surrounded by an endless band (122) forming the circumferential shell of the winding core (114), onto which endless band the storage band (116) can be winded.

20. A cash dispenser according to claim 18 or 19, **characterized in that** the storage band (116) contains two individual bands (124, 126), which are wound onto the supply roll (118) as a double layer and are guided in separate paths to an output opening of the winding store where they form a bank note input/output gap (136) and are brought together again in a guided manner via deflecting rolls (130, 134) and are wound as a double layer onto the winding core (114).

21. A cash dispenser according to one of claims 1 to 20, **characterized in that** supplementary to at least the one bank note storage unit (62) for bank notes to be dispensed, there is provided a collection compartment (64) for bank notes to be taken back.

22. A cash dispenser according to claim 21, **characterized in that** the storage unit (62) and/or the collection compartment (64) is formed as a drawer which can be pushed into the container (30).

23. A cash dispenser according to claim 22, **characterized in that** the drawers are guided on rails (66) of a frame, which frame is surrounded by the container walls.

24. A cash dispenser according to claim 22 or 23, **characterized in that** the drawer containing the bank notes is adjustable to different bank-note widths.

25. A cash dispenser according to one of claims 22 to 24, **characterized in that** a bank note colouring or destroying unit (85) is arranged above each drawer.

26. A cash dispenser according to one of claims 1 to 25, **characterized in that** in the path of the second bank note conveyor (96) a collection station (98) is provided for forming a bank note bundle (102) to be dispensed from individual bank notes removed from the at least one storage unit (62).

27. A cash dispenser according to one of claims 1 to 26, **characterized in that** the second bank note conveyor (96) has a first transport line (103) with two belt drives (148, 150), between whose endless belts (152, 162) which are arranged parallel to one another and which are revolved in the same direction by means of a drive roll (156, 166), a bank note bundle is gripped and transported, and a drive mechanism (186) for driving the belt drives (148, 150), and **in that** the belt drives (148, 150) can be driven at different speeds at least in the direction from the output compartment (28) to the collection compartment (64).

28. A cash dispenser according to claim 27, **characterized in that** the drive mechanism for each belt drive (148, 150) has an individually associated motor of which at least one is controllable with regard to its speed.

29. A cash dispenser according to claim 27, **characterized in that** both of the belt drives (148, 150) can be driven by a common motor (186), and **in that** one of the two belt drives (148, 150) in one transport direction is driven via a first drive train (194, 196, 198, 204, 202) and in the other transport direction is driven via a second drive train (194, 196, 198, 200, 180, 212, 210, 208, 206) which can be coupled to the motor (186) with a different drive ratio than the first drive train.

30. A cash dispenser according to claim 29, **characterized in that** the drive roll (166) of a first belt drive (150) and an intermediate shaft (180) parallel to it are coupled with the motor (186) in a torque-resistant manner and **in that** the drive roll (156) of the second belt drive (148) is connected in a torque-transmitting manner with the first drive roll (166) by means of a one-way coupling (204) and with the intermediate shaft (180) by means of a second one-way coupling (212) whose effective direction is opposite to that of the first one-way coupling (204).

31. A cash dispenser according to claim 30, **characterized in that** one of the one one-way couplings is a ratchet clutch.

32. A cash dispenser according to claim 30, **characterized in that** one of the one-way couplings is a grip roller clutch.

33. A cash dispenser according to claim 31 or 32, **characterized in that** the second one-way coupling is a slip clutch (212).

34. A cash dispenser according to claim 30, **characterized in that** both one-way couplings are looped spring couplings which are controlled by friction couplings with low torque.

35. A cash dispenser according to one of claims 27 to 34, **characterized in that** the first transport line (103) is coupled with a second transport line having two belt drives (174, 176), wherein an endless belt (174) of one belt drive is guided over the first drive roll (166) and the endless belt (176) of the second belt drive is guided over a drive roll (178) which is located on the intermediate shaft (180).

36. A cash dispenser according to claim 35, **characterized in that** the second transport line connects the first transport line (103) by way of a switch (178) with the collecting department (64).

## Revendications

1. Distributeur automatique de billets, comprenant un boîtier (10) ayant une zone (14) de réception pour au moins une unité (62) de stockage de billets de banque, un dispositif (70) de prélèvement, associé à l'unité (62) de stockage, pour prélever des billets de banque individuels de l'unité (62) de stockage, un dispositif (72) de transport de billets de banque pour transporter les billets de banque entre l'unité (62) de stockage et une zone (22) de service du distributeur automatique de billets, une unité d'alimentation en courant et un dispositif (94) de commande pour commander les fonctions du distributeur automatique de billets, **caractérisé en ce qu'**il est disposé, dans un réservoir (30) en forme de caisson pouvant être fermé et verrouillé, la au moins une unité (62) de stockage de billets de banque, un premier convoyeur (72) de billets de banque qui fait communiquer le dispositif (70) de prélèvement avec une fente (74) de passage dans une paroi du réservoir, un dispositif d'entraînement pour le dispositif (70) de prélèvement et le premier convoyeur (72) de billets de banque, une première unité (92) de commande pour commander les unités fonctionnelles renfermées dans le réservoir (30) et un mécanisme (85) de sécurité qui , en cas de manipulation non autorisée sur le réservoir (30), rend les billets de banque qui s'y trouvent inutilisables, **en ce que** la zone (14) de réception du boîtier (10) du distributeur de billets est réalisée pour recevoir le réservoir (30), **en ce que** le boîtier (10) contient un deuxième convoyeur (96) de billets de banque pour faire communiquer la fente (74) de passage du réservoir (30) avec la zone (22) de service ainsi qu'une deuxième unité (94) de commande pour commander les unités fonctionnelles liées au boîtier (10) et **en ce que** le réservoir (30) a une interface (60), reliée au dispositif d'entraînement et à la première unité (92) de commande dans le réservoir (30), pour son raccordement à la deuxième unité (94) de commande.

2. Distributeur automatique de billets suivant la revendication 1, **caractérisé en ce que** l'interface (60) est réalisé pour le raccordement des unités fonctionnelles contenues dans le réservoir (30) à l'unité d'alimentation en courant du distributeur automatique de billets.

3. Distributeur automatique de billets suivant la revendication 1 ou 2, **caractérisé en ce que** le réservoir (30) est relié à des roues (44, 46).

4. Distributeur automatique de billets suivant la revendication 3, **caractérisé en ce que** le réservoir (30) est disposé sur un chariot (40) et peut être réglé sur ce dernier entre une position de transport abaissée et une position relevée, en laquelle il peut être introduit dans la zone (14) de réception.

5. Distributeur automatique de billets suivant la revendication 4, **caractérisé en ce qu'**il est disposé sur le chariot (40) un dispositif (50) de levage pour lever le réservoir (30).

6. Distributeur automatique de billets suivant la revendication 5, **caractérisé en ce que** le dispositif de levage est un ressort (50) pneumatique.

7. Distributeur automatique de billets suivant l'une des revendications 1 à 6 ; **caractérisé en ce qu'**il est prévu dans la zone (14) de réception des éléments (56, 58) de guidage qui sont prévus pour coopérer avec des éléments (59) antagonistes sur le réservoir (30) et/ou le chariot (40).

8. Distributeur automatique de billets suivant l'une des revendications 1 à 7, **caractérisé en ce que** le réservoir (30) a un corps (32) de réservoir et un volet (34), mobile par rapport à ce dernier, qui peut être verrouillé sur le corps (32) de réservoir par un verrou (38) pouvant être actionné sans contact.

9. Distributeur automatique de billets suivant l'une des revendications 1 à 9, **caractérisé en ce que** le mécanisme (86, 88, 90) de sécurité peut être déclenché en étant commandé à distance.

10. Distributeur automatique de billets, suivant l'une des revendications 1 à 9, **caractérisé en ce que** le mécanisme (86, 88, 90) de sécurité peut être activé et désactivé sans contact.

11. Distributeur automatique de billets suivant la revendication 10, **caractérisé en ce que** le mécanisme (86, 88, 90) de sécurité est activé après que l'unité (62) de stockage de billets de banque a été rempli à un poste de chargement de billets de banque, reste activé de manière ininterrompu et ne peut pas être désactivé pendant le transport du réservoir (30) au distributeur de billets, pendant le fonctionnement dans le distributeur de billets et pendant le prélèvement du réservoir (30) dans le distributeur de billets ainsi que pendant le transport de retour au poste de chargement de billets de banque et ne peut être désactivé que dans le poste de chargement de billets de banque.

12. Distributeur automatique de billets suivant l'une des revendications 1 à 9, **caractérisé en ce que**, par l'intermédiaire de l'unité (94) de commande du distributeur automatique de billets, le mécanisme (86, 88, 90) de sécurité est associé au réservoir (30), peut être activé et désactivé.

13. Distributeur automatique de billets suivant l'une des revendications 1 à 12, **caractérisé en ce que** le mécanisme (86, 88, 90) de sécurité contient un émetteur de localisation.

14. Distributeur automatique de billets suivant l'une des revendications 1 à 13, **caractérisé en ce que** les dispositifs d'entraînements des convoyeurs (92, 72) de billets de banque sont réversibles et **en ce que** l'unité (62) de stockage est réalisée pour la fourniture et la réception de billets de banque individuels.

15. Distributeur automatique de billets suivant la revendication 14, **caractérisé en ce qu'**il est associé à l'unité (62) de stockage un dispositif pour l'entrée en ordre de billets de banque dans l'unité de stockage.

16. Distributeur automatique de billets suivant l'une des revendications 1 à 15, **caractérisé en ce que** l'unité (62) de stockage est réalisée pour la réception d'une pile (68) de billets de banque, le dispositif de prélèvement étant réalisé en dispositif (70) de retrait et d'individualisation.

17. Distributeur automatique de billets suivant l'une des revendications 1 à 15, **caractérisé en ce que** l'unité de stockage est un dispositif de stockage à enroulement qui a au moins une bande (116) de stockage, qui peut être enroulée d'un rouleau (118) de réserve sur un mandrin (114) et vice et versa, le mandrin (114) d'enroulement et le rouleau (118) de réserve pouvant être entraînés par un dispositif d'entraînement d'enroulement.

18. Distributeur automatique de billets suivant la revendication 17, **caractérisé en ce que** le mandrin (114) d'enroulement a deux bobines (120) qui sont disposées en ayant des axes parallèles à distance l'une de l'autre et dont au moins l'une peut être couplée au dispositif d'entraînement d'enroulement, la bande (116) de stockage enroulant les deux bobines (120) conjointement sur leur région périphérique éloignée l'une de l'autre.

19. Distributeur automatique de billets suivant la revendication 18, **caractérisé en ce que** les deux bobines (120) sont entourées d'une bande (122) sans fin qui forme l'enveloppe périphérique du mandrin (114) d'enroulement et sur laquelle la bande (116) de stockage peut être enroulée.

20. Distributeur automatique de billets suivant la revendication 18 ou 19, **caractérisé en ce que** la bande (116) de stockage comprend deux bandes (124, 126) individuelles qui sont enroulées en double couche sur le rouleau (118) de réserve et qui sont guidés sur des trajets distincts à une ouverture de sortie du dispositif de stockage à enroulement, où elles sont à nouveau guidées conjointement, avec formation d'une fente (136) d'entrée/sortie de billets de banque, respectivement par l'intermédiaire d'un galet (130, 134) de renvoi et où elles sont enroulées en double couche sur le mandrin (114) d'enroulement.

21. Distributeur automatique de billets suivant l'une des revendications 1 à 20, **caractérisé en ce qu'**il est prévu, en plus de la au moins une unité (62) de stockage de billets de banque pour des billets de banque à sortir, un casier (64) de collecte pour des billets de banque à reprendre.

22. Distributeur automatique de billets suivant la revendication 21, **caractérisé en ce que** l'unité (62) de stockage et/ou le casier (64) de collecte sont réalisés en tiroirs pouvant être enfilés dans le réservoir (30).

23. Distributeur automatique de billets, suivant la revendication 22, **caractérisé en ce que** les tiroirs sont guidés dans des rails (66) d'un support qui est entouré des parois du réservoir.

24. Distributeur automatique de billets suivant la revendication 22 ou 23, **caractérisé en ce que** le tiroir contenant une pile de billets de banque peut être réglé à différentes largeurs de billet de banque.

25. Distributeur automatique de billets suivant l'une des revendications 22 à 24, **caractérisé en ce qu'**il est disposé au-dessus de chaque tiroir une unité (85) d'encrage ou de destruction de billets de banque.

26. Distributeur automatique de billets suivant l'une des revendications 1 à 25, **caractérisé en ce qu'**il est prévu sur le trajet du deuxième convoyeur (96) de billets de banque, un poste (98) de collecte pour former une liasse (102) de billets de banque à sortir, constituée de billets de banque prélevés individuellement de la au moins une unité (62) de stockage.

27. Distributeur automatique de billets suivant l'une des revendications 1 à 26, **caractérisé en ce que** le deuxième convoyeur (96) de billets de banque a un premier trajet (103) de transport comportant deux pignons (148, 150) à courroie entre lesquels des courroies (152, 162) sans fin, orientées parallèlement l'une à l'autre, tournant dans le même sens respectivement par l'intermédiaire d'un cylindre (156, 166) d'entraînement, saisissent et transportent une liasse de billets de banque, et a un dispositif (186) . d'entraînement pour entraîner les pignons (148, 150) à courroie et **en ce que** les pignons (148, 150) à courroie peuvent être entraînés au moins dans la direction allant du casier (28) de sortie au casier (64) de collecte à des vitesses différentes.

28. Distributeur automatique de billets suivant la revendication 27, **caractérisé en ce que** le dispositif d'entraînement a pour chaque pignon (148, 150) à courroie respectivement un moteur propre dont la vitesse d'au moins un peut être commandée.

29. Distributeur automatique de billets suivant la revendication 27, **caractérisé en ce que** les deux pignons (148, 150) à courroie peuvent être entraînés par un moteur (186) commun et **en ce que** l'un des deux pignons (148, 150) à courroie peut être couplé au moteur (186), dans l'une des directions de transport par l'intermédiaire d'un premier dispositif (194, 196, 198, 204, 202) de traction à engrenage, et, dans l'autre direction de transport, par l'intermédiaire d'un deuxième dispositif (194, 196, 198, 200, 180, 212, 210, 208, 206) de traction à engrenage en ayant une multiplication différente par rapport au premier dispositif de traction à engrenage.

30. Distributeur automatique de billets suivant la revendication 29, **caractérisé en ce que** le cylindre (166) d'entraînement d'un premier pignon (150) à courroie et un arbre (180) intermédiaire qui lui est parallèle sont couplés de manière solidaire en rotation au moteur (186) et **en ce que** le cylindre (156) d'entraînement du deuxième pignon (148) à courroie est en relation transmettant les couples de rotation, par l'intermédiaire d'un premier accouplement (204) à voie unique, avec le premier cylindre (166) d'entraînement et, par l'intermédiaire d'un deuxième accouplement (212) à voie unique, dont la direction d'action est opposée à celle du premier accouplement (204) à voie unique, avec l'arbre (180) intermédiaire.

31. Distributeur automatique de billets suivant la revendication 30, **caractérisé en ce que** l'un des accouplements à voie unique est une roue libre à encliquetage.

32. Distributeur automatique de billets suivant la revendication 30, **caractérisé en ce que** l'un des accouplements à voie unique est une roue libre à corps de serrage.

33. Distributeur automatique de billets suivant la revendication 31 ou 32, **caractérisé en ce que** l'autre accouplement à voie unique est un accouplement (212) à glissement.

34. Distributeur automatique de billets suivant la revendication 30, **caractérisé en ce que** les deux accouplements à voie unique sont des accouplements par ressorts enroulés qui sont commandés par des accouplements par friction à petit couple de rotation.

35. Distributeur automatique de billets suivant l'une des revendications 27 à 34, **caractérisé en ce que** la première voie (103) de transport est couplée à une deuxième voie de transport comprenant deux pignons (174, 176) à courroie, une courroie (174) sans fin de l'un des pignons à courroie étant guidée par l'intermédiaire du premier cylindre (166) d'entraînement et la courroie (176) sans fin du second pignon à courroie étant guidée par l'intermédiaire d'un cylindre (178) d'entraînement qui se trouve sur l'arbre (180) intermédiaire.

36. Distributeur automatique de billets suivant la revendication 35, **caractérisé en ce que** la deuxième voie de transport fait communiquer la première voie (103) de transport avec le casier (64) de collecte par l'intermédiaire d'un dispositif (78) de séparation.
